# EUROPÄISCHE PATENTSCHRIFT

(11) **EP 2 741 924 B1**
(45) Veröffentlichungstag und Bekanntmachung des Hinweises auf die Patenterteilung: **01.07.2015**
(21) Anmeldenummer: 12741000.9
(22) Anmeldetag: 01.08.2012
(51) Int. Cl.: B60B 33/02

(54) **LAUFROLLE**
RUNNING ROLLER
ROULETTE

(30) Priorität: 12.08.2011 DE 102011052663
(43) Veröffentlichungstag der Anmeldung: 18.06.2014
(73) Patentinhaber: Tente GmbH & Co. KG, 42929 Wermelskirchen (DE)
(72) Erfinder: BLOCK, Wolfgang, 42929 Wermelskirchen (DE); MILBREDT, Manfred, 42859 Remscheid (DE)
(74) Vertreter: Müller, Enno
(86) Internationale Anmeldenummer: PCT/EP2012/065028
(87) Internationale Veröffentlichungsnummer: WO 2013/023917

(56) Entgegenhaltungen:
- DE-A1- 4 103 328
- DE-A1- 10 047 006
- DE-U1- 8 915 173

## Beschreibung

Die Erfindung betrifft eine Laufrolle nach den Merkmalen des Oberbegriffes des Anspruches 1.

Derartige Laufrollen sind bereits in verschiedener Hinsicht bekannt geworden.

Aus der gattungsbildenden DE-A 41 03 328 ist die Feststellvorrichtung für die Radfeststellung insgesamt schwenkbeweglich an dem Rollengehäuse gelagert. Bezogen auf einen Querschnitt ist die Lagerung bezogen auf eine Radachse gegenüberliegend zu dem Betätigungsstößel. Aus der DE-U 89 15 173 ist eine Rolle bekannt, bei welcher die aus einem Eingriffselement bestehende Feststelleinrichtung für die Radfeststellung an einem Trägerteil des Gehäuses verschieblich geführt ist.

Aus der WO 2008/055831 A1 ist eine Doppelrolle bekannt, bei welcher die Rückstellfeder unterhalb des Betätigungsstößels, unter dessen unterstem Ende angeordnet ist, jedoch koaxial zu dem Betätigungsstößel. Die bekannte Laufrolle bildet somit hinsichtlich der Feststelleinrichtung die Zusammenwirkung mit der Rückstellfeder in einem Bereich aus, in dem axial fluchtend auch der Betätigungsstößel angeordnet ist. Die erforderliche Gehäuseabstützung erbringt konstruktive Beschränkungen, schon im Hinblick auf den nutzbaren Bauraum. Zudem muss die Feststelleinrichtung in diesem Bereich auch zur Zusammenwirkung mit der Rückstellfeder in besonderer Weise ausgebildet sein.

Insbesondere hinsichtlich Laufrollen, die im Betrieb gewichtsmäßig hoch belastet sind, sind solche Einschränkungen bedeutend.

Insofern wird nach einer Laufrolle gesucht, die auch bezüglich einer hohen Belastbarkeit konstruktiv günstige Möglichkeiten eröffnet.

Eine Lösung der Problematik ist bei dem Gegenstand des Anspruches 1 gegeben, wobei darauf abgestellt ist, dass die Feststelleinrichtung für die Radfeststellung an dem Betätigungsstößel vermittels einer Führungshülse geführt ist. Die Führung der Feststelleinrichtung für das Rad ist im Bereich des Betätigungsstößels günstig auszubilden, da eine konstruktive Beschränkung in diesem Bereich durch die Anordnung der Rückstellfeder gemäß der Lehre der Erfindung nicht gegeben ist. Zudem kann damit die Rückstellfeder außerhalb eines unteren Bereiches des Betätigungsstößels angeordnet sein. Eine Beschränkung in der wirksamen Eingriffsfläche der Feststelleinrichtung für das Rad ist auch weniger gegeben. Im Hinblick auf eine hoch belastete Rolle kann die Feststelleinrichtung gut geführt und abgestützt werden und/oder ist der konstruktive Freiraum gegeben, eine große Einwirkungsfläche auszubilden.

Hinsichtlich der Rückstellfeder ist bevorzugt, dass diese in Überdeckung zu einer Drehachse des oder der Räder angeordnet ist. Sie ist damit in der Regel rollenmittig angeordnet und kann sich an einem ohnehin konstruktiv belastungsfähig auszubildenden Bauteil der Rolle abstützen. Im Hinblick auf die jedenfalls hinsichtlich der Räder selbst damit vorzugsweise mögliche mittige Anordnung der Rückstellfeder, bezogen auf einen Durchmesser der Räder, ergibt sich auch, da die Feststelleinrichtung bevorzugt ausgehend von dem Abstützungsbereich der Rückstellfeder sich in beide Radien-Richtungen erstreckend ausgebildet ist, eine vorteilhaft günstig mögliche großbauende Ausbildung der Feststelleinrichtung. Insbesondere dann, wenn, wie im Rahmen der Erfindung auch bevorzugt, die Feststelleinrichtung aus einer Reibfläche besteht, die zur Abbremsung oder Festsetzung der Räder, gegebenenfalls im Rahmen einer Totalfeststellung, zusammenwirkt, kann sich eine erwünscht große Reibfläche ausbilden lassen.

Eine weitere bevorzugte Ausgestaltung betrifft die Maßnahme, dass die Feststelleinrichtung die Drehachse umgreift. Die Feststelleinrichtung, die in dieser Gestaltung bevorzugt unter- und/oder oberseitig den genannten Zusammenwirkungsbereich mit den Rädern, also bevorzugt eine oder mehrere Reibflächen, ausbildet, kann so günstig abgestützt und gelagert werden. Die Abstützung kann oberhalb oder unterhalb der Drehachse, abhängig auch von der Einwirkungsfläche der Feststelleinrichtung auf das oder die Räder, vorgesehen sein. Darüber hinaus aber auch, jeweils bezogen auf eine Rolle im Gebrauchszustand, vorder- oder rückseitig.

Im Falle der Ausbildung der genannten Reibfläche, gegebenenfalls aber auch im Falle einer Ausbildung einer Formschlusszusammenwirkung zur Radfeststellung, ist auch bevorzugt, dass sich die Zusammenwirkungsfläche mit einer Radinnenfläche im Eingriffszustand über einen Umfangswinkel von mehr als 40 Grad erstreckt, bevorzugt bis hin zu 80 Grad.

Weiter ist bevorzugt, dass ein das Betätigungsteil aufnehmender Montagezapfen vorgesehen ist. Dieser Montagezapfen, der relativ zu einem Gegenstand, der mit der Rolle bestückt wird, beispielsweise einem Krankenhausbett, feststehend montiert wird, ist bevorzugt mittels zweier Wälzlagern relativ zu dem Gehäuse der Rolle drehgelagert. Hierbei ist weiter bevorzugt, dass das Eingriffsteil vertikal zwischen den Drehlagern angeordnet ist. Insbesondere dieses Merkmal hat auch unabhängig von den zuvor oder nachstehend beschriebenen Merkmalen Bedeutung. Dadurch können die Drehlager einerseits vertikal vergleichsweise weit entfernt zueinander angeordnet sein, beispielsweise einen vertikalen Abstand aufweisen, jeweils von einer horizontalen Mittellinie der Drehlager aus gemessen, der einem Durchmessermaß oder mehr des Betätigungsstößels entspricht. Beispielsweise bis hin zu einem 5-fachen Durchmessermaß. Der Zwischenraum, in vertikaler Richtung, zwischen den Wälzlagern, die bevorzugt Kugellager sind, ist gleichwohl günstig genutzt durch die Anordnung des Eingriffsteils und weiter bevorzugt auch der Gegenteile, mit denen das Eingriffsteil in der Richtungsfeststellung zusammenwirkt.

Weiter ist auch bevorzugt eine Vorspannung des Betätigungsstößels in seine Freigabestellung vorgesehen. Dies mittels einer Rückstellfeder. Diese Rückstellfeder ist weiter bevorzugt im Falle von mehreren Drehlagern oberhalb des obersten Drehlagers ausgebildet. Der konstruktiv aufwendigere, aber in der Regel auch geringere Flächenquerschnitte aufweisende Bereich des Montagezapfens und des Betätigungsstößels, in dem Bereich, in dem diese Rückstellfeder angeordnet ist, ist damit günstig in einem im Einbauzustand in der Vorrichtung aufgenommenen und geschützten Bereich aufgenommen. Im Hinblick auf aufzunehmende große Lasten ist ein weiterer, vertikal weiter unten befindlicher Bereich des Montagezapfens bzw. des Betätigungsstößels und der Drehlager hiervon nicht beeinflusst.

Weiter ist auch bevorzugt, dass der Betätigungsstößel in der zumindest ein Wälzlager durchsetzenden Führungshülse aufgenommen ist und dass die Führungshülse darüber hinaus eine Führungsausnehmung der Feststelleinrichtung durchsetzt. Somit kann die Führungshülse in die Lagerung und Stabilisierung der Feststelleinrichtung konstruktiv mit einbezogen werden. Auch diese Maßnahme ist insbesondere günstig, wenn es um Laufrollen geht, die vergleichsweise hohe Lasten aufzunehmen haben. Von hohen Lasten ist im Zusammenhang mit vorliegender Erfindung dann gesprochen, wenn eine Laufrolle eine Gewichtslast von mehr als 30 kg, etwa bis hin zu 150 kg oder 250 kg, jedenfalls aber bis zu 200 kg, aufzunehmen hat. Dies bezogen auf einen statischen Zustand. Es versteht sich, dass hiermit insbesondere im Betrieb, bei einem rollenden Gegenstand und dann eingreifender Betätigung, etwa Richtungs- und/ oder Totalfeststellung, hiermit sehr hohe Kräfte verbunden sein können.

Im Hinblick auf den Betätigungsstößel ist auch bevorzugt, dass dieser zwei Wälzlager in vertikaler Richtung durchsetzt. Bei dieser Gestaltung ist darüber hinaus bevorzugt, dass der Betätigungsstößel mit der Feststelleinrichtung unterhalb des untersten Wälzlagers zusammenwirkt. Die Zusammenwirkung des Betätigungsstößels mit den Wälzlagern ist also gleichsam entlastet von der Zusammenwirkung mit der Feststelleinrichtung. Der untere Bereich, insbesondere dann, wenn, wie bevorzugt, die Rückstellfeder für die Feststelleinrichtung außerhalb und seitlich versetzt zu dem Betätigungsstößel angeordnet ist, kann konstruktiv praktisch ohne Einschränkung auf diese Zusammenwirkung, insbesondere Drehlagerung des Betätigungsstößels relativ zu der Feststelleinrichtung ausgerichtet sein.

Weiter ist auch bevorzugt, dass die Führungshülse jedenfalls in ihrem mit der Feststelleinrichtung zusammenwirkenden Bereich, bezogen auf eine vertikale Erstreckung, von einem Buchsenteil umgeben ist, das auch eine wesentliche Erstreckung in horizontaler Richtung aufweist. Insbesondere eine solche Erstreckung, dass es zugleich auch eine Aufnahme für die Rückstellfeder der Feststelleinrichtung - mit - bildet. Dies kann insbesondere dadurch gegeben sein, dass dieses Buchsenteil an bevorzugt zwei gegenüberliegenden Buchsenwandungen einander zugeordnete Ausbildungen aufweist, an denen die Rückstellfeder, insbesondere in seitlicher Richtung, eine Abstützung findet. Diese Ausformungen brauchen nicht ineinander überzugehen, so dass sich etwa eine kreisringumfassende Halterung der Rückstellfeder ergeben würde. Es ist ausreichend und bevorzugt, wenn diese Abstützung und Halterung der Rückstellfeder über einen wesentlichen Umfangswinkelbereich, beispielsweise von 20 Grad bis 120 Grad, zusammengefasst gesehen, ergibt.

Die vor- und nachstehend angegebenen Bereiche bzw. Wertebereiche schließen hinsichtlich der Offenbarung auch sämtliche Zwischenwerte ein, insbesondere in Einzehntel-Schritten der jeweiligen Dimension, auch dimensionslos, beispielsweise 1/10 Grad, 1/10 Durchmesser etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweiligen Bereich.

Nachstehend ist die Erfindung des Weiteren anhand der beigefügten Zeichnung erläutert, die jedoch lediglich ein Ausführungsbeispiel darstellt. Hierbei zeigt:
- Fig. 1: eine perspektivische Ansicht der als Doppelrolle ausgebildeten Laufrolle;
- Fig. 2: eine Seitenansicht der Laufrolle gemäß Figur 1, mit schematisch eingezeichneten Funktionsteilen;
- Fig. 3: eine Rückansicht der Laufrolle gemäß Figur 1;
- Fig. 4: einen Querschnitt durch die Laufrolle gemäß Figur 3, geschnitten in der Ebene IV - IV;
- Fig. 5: eine Herausvergrößerung des Bereichs V in Figur 4;
- Fig. 6: eine perspektivische Herausvergrößerung des Zusammenwirkungsbereiches des Eingriffsteils zur Richtungsfeststellung mit den Gegenteilen;
- Fig. 7: eine weitere perspektivische Herausvergrößerung des Eingriffsteiles zur Richtungsfeststellung;
- Fig. 8: eine Explosionsdarstellung der Laufrolle;
- Fig. 9: eine Querschnittsdarstellung gemäß Figur 4, bei Richtungsfeststellung;

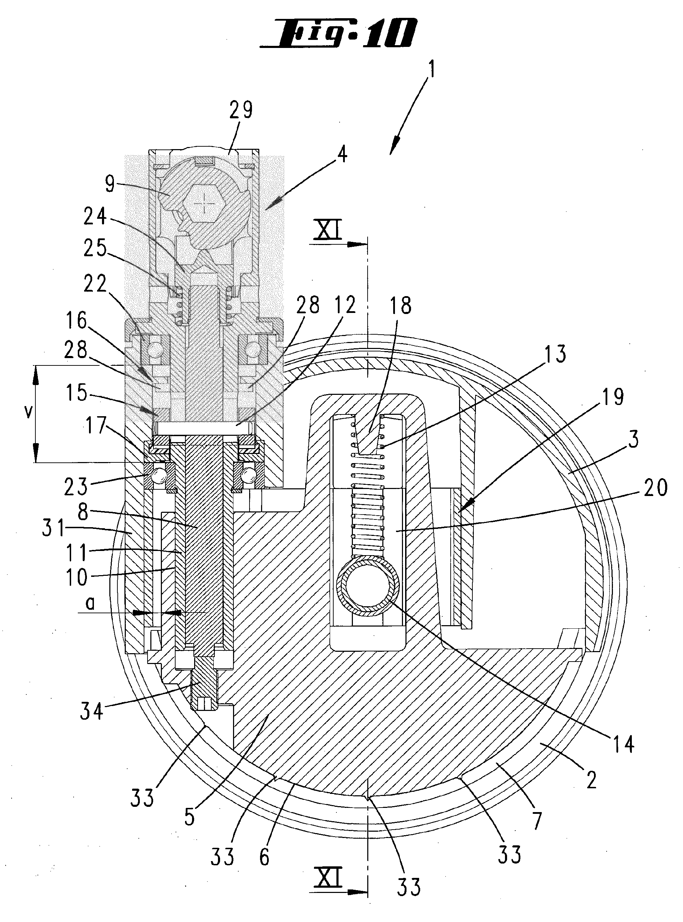

- Fig. 10: eine weitere Querschnittsdarstellung gemäß Figur 4, bei Totalfeststellung; und
- Fig. 11: einen Querschnitt durch die Rolle gemäß Figur 10, geschnitten in der Ebene XI - XI.

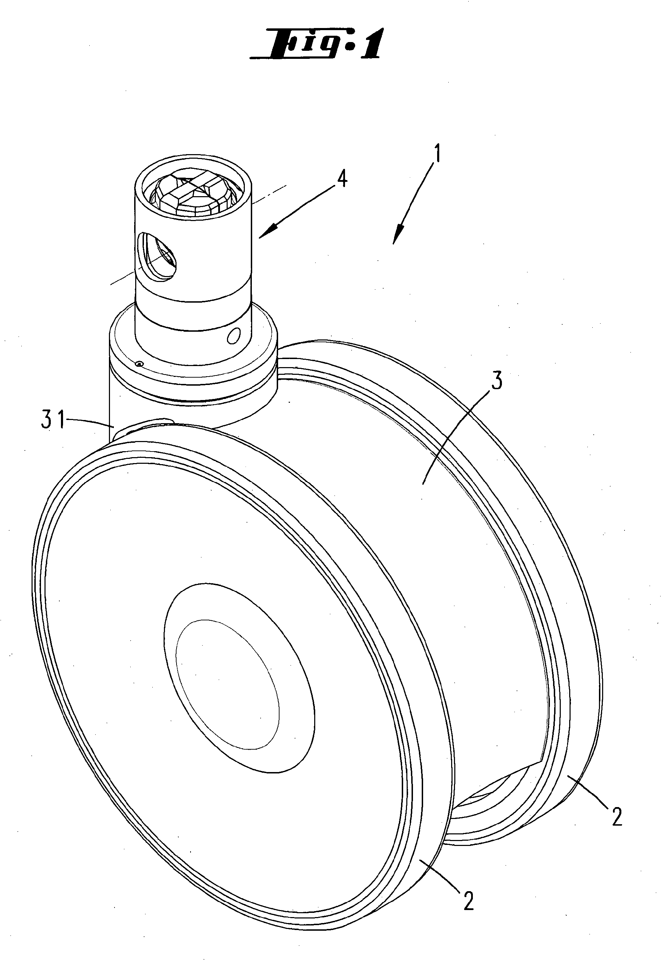

Dargestellt und beschrieben, mit Bezug etwa zunächst zu Figur 1, ist eine Laufrolle 1 mit Rädern 2, einem Gehäuse 3 und einem Montagezapfen 4.

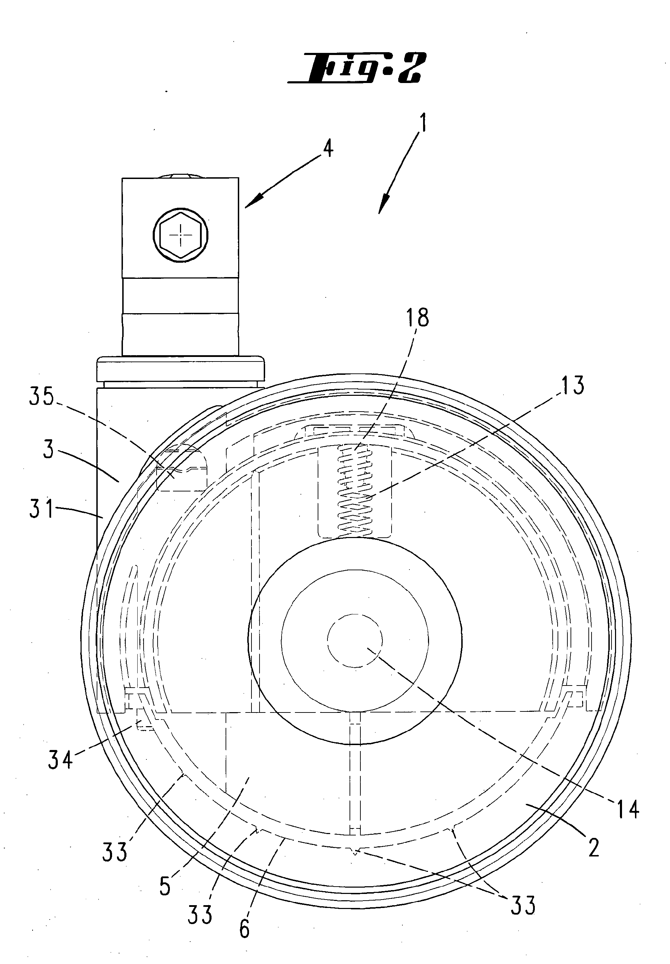

In der Laufrolle 1, vgl. auch Figur 2, ist eine Feststelleinrichtung 5 angeordnet, zur Bremsfeststellung der Räder 2.

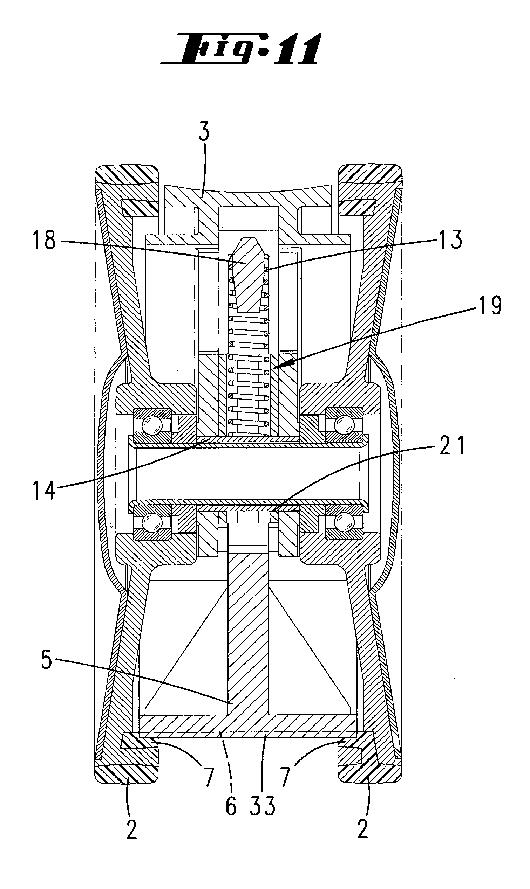

In Einzelheit weist die Feststelleinrichtung 5 beim Ausführungsbeispiel eine Zusammenwirkungsfläche 6 auf, die mit einer Radinnenfläche 7, vgl. insbesondere auch Figur 11, in der Bremsstellung bzw. der Stellung der Totalfeststellung zusammenwirkt.

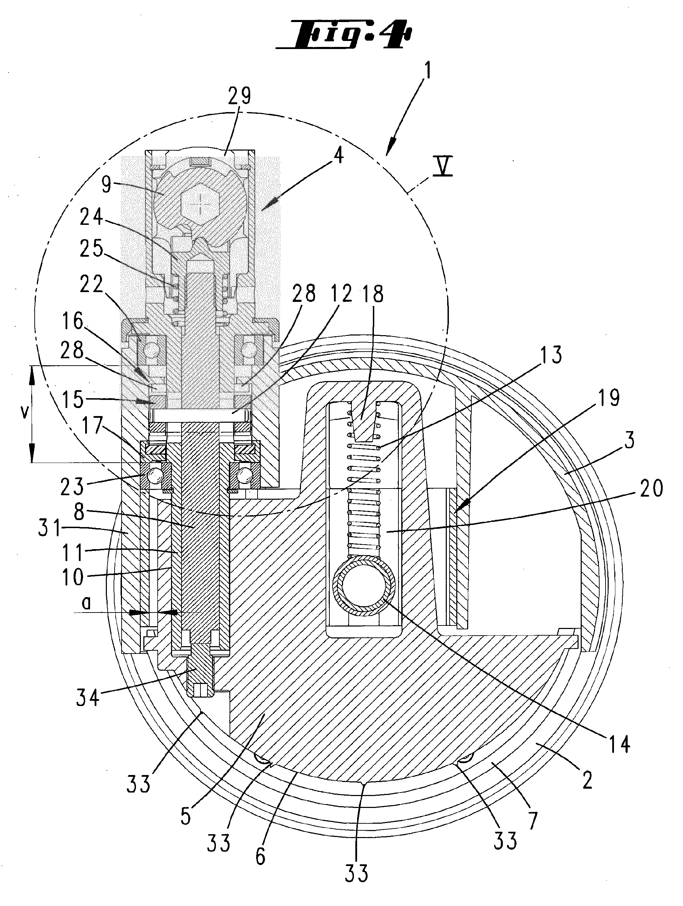

Weiter weist die Rolle 1, vgl. etwa Figur 4, einen Betätigungsstößel 8 auf, der zur Betätigung der Feststelleinrichtung 5 bewegt werden kann. Die Bewegung erfolgt beim Ausführungsbeispiel im Einzelnen durch ein den Betätigungsstößel 8 oberseitig beaufschlagendes Nockenrad 9.

Die Feststelleinrichtung 5 ist an dem Betätigungsstößel 8 geführt. Beim Ausführungsbeispiel ist zur Führung in der Feststelleinrichtung 5 eine beim Ausführungsbeispiel und bevorzugt zylindrische Ausnehmung 10 ausgebildet, in welche der Betätigungsstößel 8 über eine erhebliche vertikale Höhe eingefahren ist. Die Höhe entspricht etwa dem zwei- bis zehnfachen des Durchmessers des Betätigungsstößels 8, weiter bevorzugt insbesondere dem vier- bis achtfachen des Durchmessers des Betätigungsstößels 8. In weiterer Einzelheit ist beim Ausführungsbeispiel die Zusammenwirkung zwischen der Feststelleinrichtung 5 und dem Betätigungsstößel 8 vermittels einer Führungshülse 11 gegeben. Die, vgl. auch den Halterungsbolzen 12, mit dem Betätigungsstößel 8 drehfest verbundene Führungshülse 11 ist praktisch spielfrei zu dem Betätigungsstößel 8 und auch zu der Ausnehmung 10 angeordnet. Zwischen der Innenfläche der Ausnehmung 10 und der Außenfläche der Führungshülse 11 ergibt sich aber beim Verschwenken der Rolle eine Drehbewegung.

Bei dem Ausführungsbeispiel bildet die Führungshülse 11 auch zugleich den Montagezapfen 4.

Die Feststelleinrichtung 5 ist weiter durch eine Rückstellfeder 13 in ihre Freigabestellung vorgespannt.

Die Rückstellfeder 13 ist seitlich versetzt zu dem Betätigungsstößel 8, beim Ausführungsbeispiel entsprechend aber auch seitlich versetzt zu der Führungshülse 11 und der Ausnehmung 10, angeordnet.

Weiter ist die Rückstellfeder 13 bevorzugt und wie ersichtlich beim Ausführungsbeispiel bezüglich eines Zusammenwirkens mit einer Radachse 14, nämlich sich hierauf abstützend, angeordnet. Die Rückstellfeder 13 ist seitlich versetzt zu dem Betätigungsstößel 12 angeordnet. Nämlich in Horizontalrichtung, ausgehend von dem Betätigungsstößel 12 zum gegenüberliegenden Radbereich hin versetzt.

Die Rückstellfeder 13 ist eine Druckfeder.

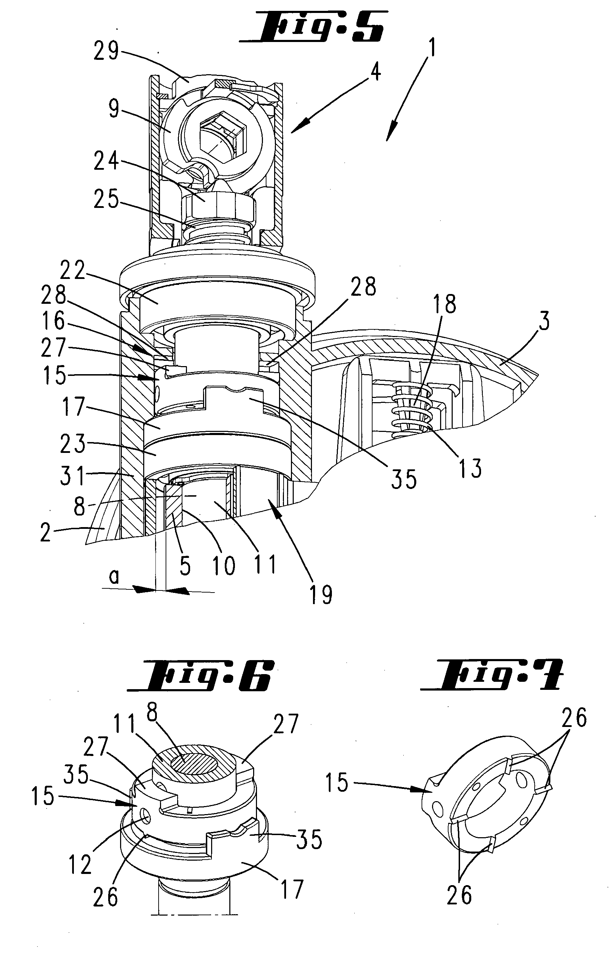

Der ein Betätigungsteil darstellende Betätigungsstößel 8 ist zur Richtungsfeststellung drehfest mit einem Eingriffsteil 15 verbunden, vgl. insbesondere Figur 7, aber auch die Figuren 5 und 6. Das Eingriffsteil 15 wirkt zur Richtungsfeststellung mit einem oberen, ersten Gegenteil 16 formschlüssig zur Richtungsfeststellung zusammen. Dagegen mit einem unteren, zweiten Gegenteil 17 reibschlüssig. Die reibschlüssige Zusammenwirkung ist beim Ausführungsbeispiel im Falle der Totalfeststellung gegeben. Ersichtlich kann das Eingriffsteil hierzu unterseitig bevorzugt radial gerichtete Eingriffsvorsprünge 26 aufweisen.

Grundsätzlich und im Rahmen der Erfindung auch als mögliche Ausgestaltung gegeben, kann auch das erste Gegenteil 16 zur reibschlüssigen Zusammenwirkung mit dem Eingriffsteil 15 ausgebildet sein.

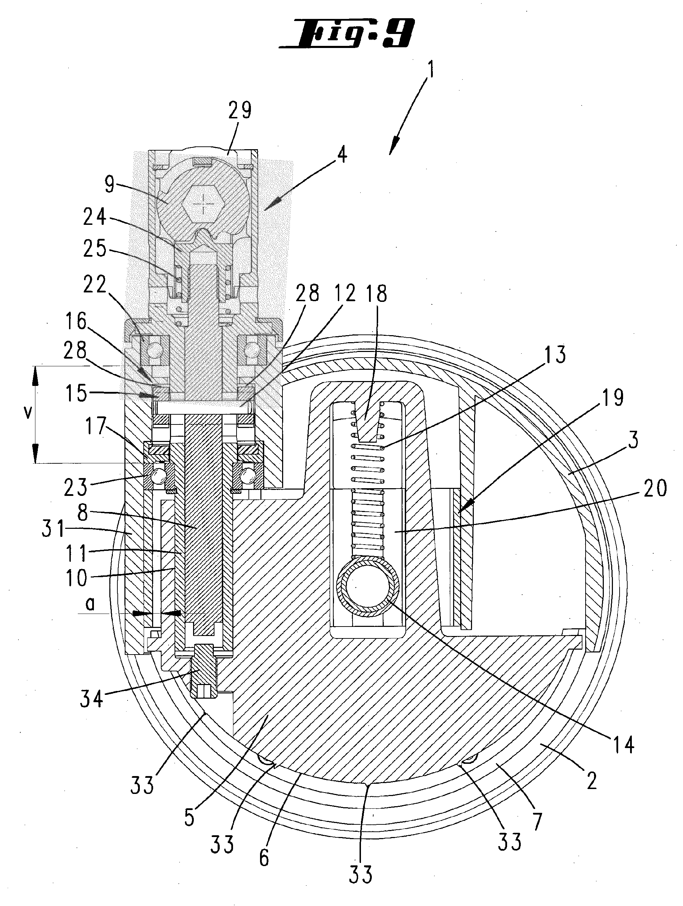

Hinsichtlich der Rückstellfeder 13 ist in weiterer Einzelheit bevorzugt vorgesehen, dass diese unmittelbar in vertikaler Überdeckung zu der Radachse 14 angeordnet ist. Wie auch aus der Darstellung in Figur 9 etwa ersichtlich, stützt sich die Rückstellfeder 13 gleichsam im Zenit der Radachse 14 auf dieser ab.

Hinsichtlich der Feststelleinrichtung 5 ist vorgesehen, dass diese, bevorzugt mit seitlichem Abstand, die Radachse 14 umgreift. Es ist ein fensterartiger Ausbruch in der sich in diesem Bereich über einen wesentlichen Teil des Innendurchmessers des Rades erstreckenden Feststelleinrichtung 5 gegeben. Der Ausbruch ist langgestreckt, mit einer um das zwei- bis fünffache größeren Höhe als Breite. Auch diesbezüglich sind alle Zwischenwerte, also beispielsweise eine 2,1-fache bis fünffache oder zwei- bis 4,9-fache etc. in die Offenbarung im vorstehend ausführlicher angegebenen Sinne einbegriffen.

Der auch als torartig zu bezeichnende Ausbruch ist von einem oberen Querbalken begrenzt, in, wie aus der Darstellung ersichtlich, bevorzugt integraler Ausbildung mit der Feststelleinrichtung 5. Der Querbalken weist bevorzugt mittig einen nach unten ragenden Halterungszapfen 18 auf, der von der bevorzugt beim Ausführungsbeispiel als Wendelfeder ausgebildeten Rückstellfeder 13 umfasst ist.

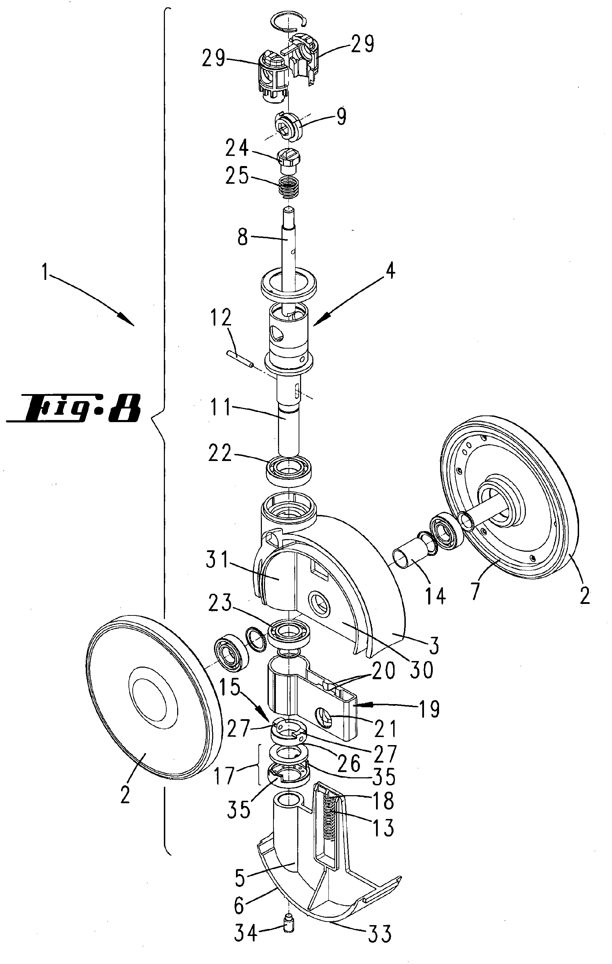

Die Führung der Rückstellfeder 13 im unteren Bereich, insbesondere auch nahe bei oder bis in den Zusammenwirkungsbereich mit der Radachse 14, ist durch ein Buchsenteil 19 gegeben, das beim Ausführungsbeispiel, wie sich insbesondere auch aus der Explosionsdarstellung der Figur 8 ergibt, in Horizontalrichtung langgestreckt ausgebildet ist. Das Buchsenteil 19 weist im Horizontalquerschnitt eine einer Schlüssellochkontur entsprechende umlaufende Wandung auf. Der Vergrößerungsbereich der Schlüssellochkontur ist dem Betätigungsstößel 12, zu dessen Umfassung, zugeordnet. Das Buchsenteil 19 geht konkret im Bereich des Betätigungsstößels 8 und der diesen umgebenden Führungshülse 11 sowie dem Bereich der Feststelleinrichtung 5, welcher die Ausnehmung 10 bildet, in einen kreisförmigen Teil über, welcher eine Außenwandung der Feststelleinrichtung 5 in diesem Bereich mit radialem Abstand a umgibt.

In dem Buchsenteil 19 sind weiter, bevorzugt im schmaleren Teil der Kontur, zur Führung der Rückstellfeder 13, vgl. auch hierzu insbesondere Figur 8, zwei gegenüberliegende kreisabschnittsförmige, sich vertikal erstreckende Schalenabschnitte 20 ausgeformt, die mit einem Außenumfang der Rückstellfeder 13 entsprechend führend zusammenwirken.

Das Buchsenteil 19 weist zudem im Zusammenbau in Richtung der Radachse 14 verlaufende Achsenausnehmungen 21 auf. Diese sind entsprechend im Einbauzustand von der Radachse 14 durchsetzt.

Im Bereich des Montagezapfens 4, in dessen vertikaler Erstreckung oder Fortsetzung nach unten, sind zwei beim Ausführungsbeispiel als Kugellager ausgebildete Wälzlager 22, 23 angeordnet. Das Eingriffsteil 15 sowie auch beim Ausführungsbeispiel beide Gegenteile 16, 17 sind innerhalb des vertikalen Abstandsraumes v zwischen den Wälzlagern 22,23 angeordnet.

Ein Gegenteil 17 kann auch mit einem oder mehreren, sich axial erstreckenden Verriegelungsvorsprüngen 35 ausgebildet sein. Hiermit kann eine Formschlussverbindung, zur Verhinderung einer Drehbewegung, relativ zu dem Gehäuse 3, das beim Ausführungsbeispiel auch als Gabel zu bezeichnen ist, erreicht sein. Die entsprechende Ausnehmung (oder mehrere) in dem Gehäuse 3 ist nicht dargestellt.

Der Betätigungsstößel 8 ist im Bereich seines oberen Endes mit einem Nockenteil 24 versehen. Beim Ausführungsbeispiel sind diese Teile miteinander schraubverbunden.

Weiter wirkt zwischen dem Nockenteil 24 und der Führungshülse 11, die in einem Bereich oberhalb des obersten Wälzlagers 22 auch radial verbreitert ist, eine Stößel-Rückstellfeder 25. Mittels dieser Stößel-Rückstellfeder 25 ist der Betätigungsstößel 8 in seine Freigabestellung vorgespannt. Die Freigabestellung bezieht sich hierbei auf die Feststelleinrichtung 5. Im Hinblick auf die Drehfeststellung ist er ersichtlich durch diese Feder nur hinsichtlich des zweiten Gegenteiles 17 in die Freigabestellung vorgespannt. Hinsichtlich des ersten Gegenteiles 16 aber in die Verriegelungsstellung vorgespannt.

Mit weiterem Bezug zu den Figuren 5 bis 7 ist auch zu erkennen, dass das Eingriffsteil 15 oberseitig, hier in Form von zwei gegenüberliegend ausgebildeten, Zahnausformungen 27 aufweist. Diese Zahnausformungen 27 wirken mit gehäusefest ausgebildeten Gegenausformungen 28 im Zustand der Richtungsfeststellung zusammen.

Wie sich weiter aus der Explosionsdarstellung der Figur 8 ergibt, ist umgebend zu dem Nockenrad 9 eine Gehäuseausbildung des Montagezapfens 4 durch zwei in vertikaler Richtung geteilte Gehäuseteile 29 gegeben.

Das Buchsenteil 19 ist weiter zwischen zwei Gehäusewänden 30 aufgenommen, die auch montagezapfenseitig in einen Zylinderbereich 31 übergehen. In dem Zylinderbereich 31 ist dann in weiterer Einzelheit der entsprechende, bereits beschriebene Bereich des Buchsenteils 19 aufgenommen wie auch die Führungshülse 11 und der zentral dazu dann angeordnete Betätigungsstößel 8.

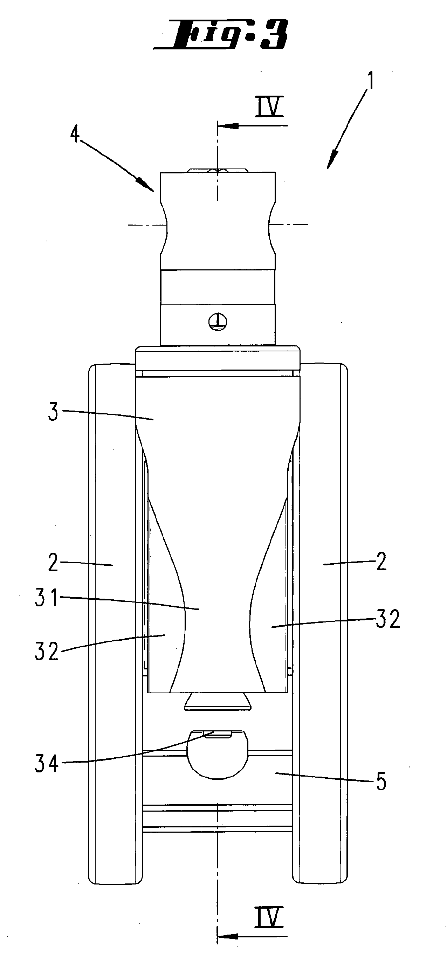

Wie sich etwa aus Figur 9 ergibt, ist der Zylinderbereich 31 allerdings mit unterschiedlicher axialer Erstreckung ausgebildet. Außenseitig, hier auch die rückwärtige Außenfläche 32, wie etwa aus Figur 3 ersichtlich, mifbildend ragt der Zylinderbereich 31 bis in den Bereich des unteren Endes des Betätigungsstößels 8. Gehäuseinnenseitig endet der Zylinderbereich dagegen im Bereich des unteren Wälzlagers 23.

Die Zusammenwirkungsfläche 6, die im Bremszustand, wie etwa aus Figur 11 ersichtlich, mit der Radinnenfläche 7, die bevorzugt aus einem Gummi- oder Elastomerwerkstoff besteht, reibschlüssig zusammenwirkt, ist, vergleichbar der Unterseite des Eingriffsteil 15 mit Zahnausformungen 33 versehen, die sich in Richtung der Radachse 14 erstreckend ausgeformt sind.

Über eine Einstellschraube 34, die unmittelbar von außen und unten zugänglich ist, siehe hierzu auch ergänzend Figur 3, kann das Eingriffsmaß zwischen der Zusammenwirkungsfläche 6 und der Radinnenfläche 7 eingestellt werden.

**Bezugszeichenliste**

| | | | |
|---|---|---|---|
| 1 | Laufrolle | 25 | Stößel-Rückstellfeder |
| 2 | Räder | 26 | Eingriffsvorsprung |
| 3 | Gehäuse | 27 | Zahnausformung |
| 4 | Montagezapfen | 28 | Gegenausformung |
| 5 | Feststelleinrichtung | 29 | Gehäuseteil |
| 6 | Zusammenwirkungsfläche | 30 | Gehäusewand |
| 7 | Radinnenfläche | 31 | Zylinderabschnitt |
| 8 | Betätigungsstößel | 32 | Außenfläche |
| 9 | Nockenrad | 33 | Zahnausformung |
| 10 | Ausnehmung | 34 | Einstellschraube |
| 11 | Führungshülse | 35 | Verriegelungsvorsprung |
| 12 | Halterungsbolzen | | |
| 13 | Rückstellfeder | a | Abstand |
| 14 | Radachse | v | Abstandsraum |
| 15 | Eingriffsteil | | |
| 16 | erstes Gegenteil | | |
| 17 | zweites Gegenteil | | |
| 18 | Halterungszapfen | | |
| 19 | Buchsenteil | | |
| 20 | Schalenausformung | | |
| 21 | Achsausnehmung | | |
| 22 | Wälzlager | | |
| 23 | Wälzlager | | |
| 24 | Nockenteil | | |

## Patentansprüche

1. Laufrolle (1), vorzugsweise Doppelrolle, mit einem bzw. zwei Rädern (2), einem Gehäuse (3), einer Feststelleinrichtung (5), jedenfalls für eine Radfeststellung, und einem Betätigungsstößel (8) zur Einwirkung auf die Feststelleinrichtung (5), wobei außerhalb des Betätigungsstößels (8) eine die Feststelleinrichtung (5) für die Radfeststellung in ihrer Freigabestellung vorspannende gehäusefest abgestützte Rückstellfeder (13) vorgesehen ist, die seitlich versetzt zu dem Betätigungsstößel (8) angeordnet ist, **dadurch gekennzeichnet, dass** die Feststelleinrichtung (5) für die Radfeststellung an dem Betätigungsstößel (8) vermittels einer Führungshülse (11) geführt ist.

2. Laufrolle (1) nach Anspruch 1, **dadurch gekennzeichnet, dass** die Rückstellfeder (13) der Feststelleinrichtung (5) für die Radfeststellung in Überdeckung zu einer Radachse (14) des oder der Räder (2) angeordnet ist.

3. Laufrolle (1) nach einem der vorstehenden Ansprüche, **dadurch gekennzeichnet, dass** die Feststelleinrichtung (5) für die Radfeststellung die Radachse (14) umgreift.

4. Laufrolle (1) nach einem der vorstehenden Ansprüche, **dadurch gekennzeichnet, dass** die Feststelleinrichtung (5) für die Radfeststelling zur Zusammenwirkung mit einer Radinnenfläche (7) ein Einwirkungsteil mit einer Zusammenwirkungsfläche (6) aufweist und dass die Zusammenwirkungsfläche (6) mit der Radinnenfläche (7) im Eingriffszustand über einen Umfangswinkel von mehr als 40 Grad im Eingriff ist.

5. Laufrolle (1) nach einem der vorstehenden Ansprüche, **dadurch gekennzeichnet, dass** zur Richtungsfeststellung ein mit einem Betätigungsteil drehfest verbundenes Eingriffsteil (15) vorgesehen ist, das bei einer lediglichen Richtungsfeststellung mit einem ersten Gegenteil (16) formschlüssig und zur Totalfeststellung mit einem zweiten Gegenteil (17) zusammenwirkt und dass das Eingriffsteil (15) mit dem zweiten Gegenteil (17) reibschlüssig zusammenwirkt.

6. Laufrolle (1) nach Anspruch 5, **dadurch gekennzeichnet, dass** ein das Betätigungsteil aufnehmender Montagezapfen (4) vorgesehen ist, der gegenüber dem Gehäuse (3) mittels zweier Wälzlager (22, 23) drehgelagert ist, und dass das Eingriffsteil (15) vertikal zwischen den Wälzlagern (22, 23) angeordnet ist.

7. Laufrolle (1) nach Anspruch 6, **dadurch gekennzeichnet, dass** der Betätigungsstößel (8) mittels einer oberhalb des obersten Drehlagers angeordneten Rückstellfeder (13) in seine Freigabestellung vorgespannt ist.

8. Laufrolle (1) nach einem der Ansprüche 6 oder 7, **dadurch gekennzeichnet, dass** der Betätigungsstößel (8) in der zumindest ein Wälzlager (22, 23) durchsetzenden Führungshülse (11) aufgenommen ist und dass die Führungshülse (11) weiter eine Ausnehmung (10) der Feststelleinrichtung (5) durchsetzt.

9. Laufrolle (1) nach einem der Ansprüche 6 bis 8, **dadurch gekennzeichnet, dass** der Betätigungsstößel (8) zwei Wälzlager (22, 23) durchsetzt und mit der Feststelleinrichtung (5) unterhalb des untersten Wälzlagers (23) zusammenwirkt.

10. Laufrolle (1) nach einem der Ansprüche 8 oder 9, **dadurch gekennzeichnet, dass** die Führungshülse (11) jedenfalls in ihrem mit der Feststelleinrichtung (5) zusammenwirkenden Bereich von einem Buchsenteil (19) umgeben ist.

## Claims

1. Caster (1), preferably a double caster, comprising one or two wheels (2), a housing (3), a locking device (5), at least for locking one wheel, and an actuating ram (8) for acting on the locking device (5), a return spring (13), which is rigidly supported in the housing and biases the locking device (5) for wheel-locking in the release position thereof, being provided outside the actuating ram (8), which return spring is arranged so as to be laterally offset from the actuating ram (8), **characterised in that** the locking device (5) for wheel-locking is guided on the actuating ram (8) by a guide sleeve (11).

2. Caster (1) according to claim 1, **characterised in that** the return spring (13) of the locking device (5) for wheel-locking is arranged so as to align with a wheel axle (14) of the wheel(s) (2).

3. Caster (1) according to either of the preceding claims, **characterised in that** the locking device (5) for wheel-locking encompasses the wheel axle (14).

4. Caster (1) according to any of the preceding claims, **characterised in that** the locking device (5) for wheel-locking comprises an active part having a cooperation surface (6) for cooperating with an inner surface (7) of a wheel, and **in that**, in the engagement state, the cooperation surface (6) is engaged in the inner surface (7) of the wheel over a circumferential angle of more than 40°.

5. Caster (1) according to any of the preceding claims, **characterised in that** an engagement part (15), connected for conjoint rotation to an actuating part, is provided for locking the direction, which engagement part cooperates in a positive engagement with a first counter-part (16) when locking merely the direction and cooperates with a second counter-part (17) for complete locking, and **in that** the engagement part (15) cooperates in a frictionally engaged manner with the second counter-part (17).

6. Caster (1) according to claim 5, **characterised in that** an assembly pin (4), which receives the actuating part, is provided and is rotatably mounted relative to the housing (3) by means of two roller bearings (22, 23), and **in that** the engagement part (15) is arranged vertically between the roller bearings (22, 23).

7. Caster (1) according to claim 6, **characterised in that** the actuating ram (8) is biased in the release position thereof by a return spring (13) arranged above the uppermost pivot bearing.

8. Caster (1) according to either claim 6 or claim 7, **characterised in that** the actuating ram (8) is accommodated in the guide sleeve (11) which pushes through at least one roller bearing (22, 23) and **in that** the guide sleeve (11) also pushes through a recess (10) in the locking device (5).

9. Caster (1) according to any of claims 6 to 8, **characterised in that** the actuating ram (8) pushes through two roller bearings (22, 23) and cooperates with the locking device (5) below the lowest roller bearing (23).

10. Caster (1) according to either claim 8 or claim 9, **characterised in that** the guide sleeve (11) is surrounded by a bushing part (19), at least in the region of said guide sleeve which cooperates with the locking device (5).

## Revendications

1. Roulette (1), de préférence roulette jumelée, comprenant une ou deux roues (2), un logement (3), un dispositif de blocage (5), le cas échéant pour un blocage des roues, et un poussoir d'actionnement (8) destiné à agir sur le dispositif de blocage (5), en dehors du poussoir d'actionnement (8) étant prévu un ressort de rappel (13) supporté de façon fixe sur le logement précontraignant sur le dispositif de blocage (5) pour le blocage des roues dans leur position libre, qui est agencé décalé sur le côté par rapport au poussoir d'actionnement (8), **caractérisée en ce que** le dispositif de blocage (5) pour le blocage des roues est guidé au niveau du poussoir d'actionnement (8) au moyen d'un manchon de guidage (11).

2. Roulette (1) selon la revendication 1, **caractérisée en ce que** le ressort de rappel (13) du dispositif de blocage (5) pour le blocage des roues est agencé en superposition avec un axe de roue (14) de la roue ou des roues (2).

3. Roulette (1) selon l'une des revendications précédentes, **caractérisée en ce que** le dispositif de blocage (5) pour le blocage des roues entoure l'axe de roue (14).

4. Roulette (1) selon l'une des revendications précédentes, **caractérisée en ce que** le dispositif de blocage (5) pour le blocage des roues présentes, aux fins de la coopération avec une surface intérieure de roue (7), une pièce d'action comprenant une surface de coopération (6) et **en ce que** la surface de coopération (6), dans la position de prise, est en prise avec la surface inférieure de roue (7) sur un angle circonférentiel de plus de 40 degrés.

5. Roulette (1) selon l'une des revendications précédentes, **caractérisée en ce qu'**il est prévu, aux fins du blocage de la direction, une pièce de prise (15) reliée de façon solidaire en rotation avec une pièce d'actionnement, qui coopère avec une première pièce opposée (16) par assemblage de forme dans le cas d'un simple blocage de la direction et avec une deuxième pièce opposée (17) aux fins d'un blocage total et **en ce que** la pièce de prise (15) coopère avec la deuxième pièce opposée (17) par friction.

6. Roulette (1) selon la revendication 5, **caractérisée en ce qu'**il est prévu un tenon de montage (4) recevant la pièce d'actionnement, qui est monté en rotation par rapport au logement (3) au moyen de deux roulements (22, 23), et **en ce que** la pièce de prise (15) est agencée verticalement entre les paliers de roulement (22, 23).

7. Roulette (1) selon la revendication 6, **caractérisée en ce que** le poussoir d'actionnement (8) est précontraint dans sa position libre au moyen d'un ressort de rappel (13) agencé au-dessus du palier rotatif le plus haut.

8. Roulette (1) selon l'une des revendications 6 ou 7, **caractérisée en ce que** le poussoir d'actionnement (8) est reçu dans l'au moins un manchon de guidage (11) traversant un roulement (22, 23) et **en ce que** le manchon de guidage (11) traverse en outre un évidement (10) du dispositif de blocage (5).

9. Roulette (1) selon l'une des revendications 6 à 8, **caractérisée en ce que** le poussoir d'actionnement (8) traverse deux roulements (22, 23) et coopère avec le dispositif de blocage (5) en dessous du roulement le plus bas (23).

10. Roulette (1) selon l'une des revendications 8 ou 9, **caractérisée en ce que** le manchon de guidage (11) est à chaque fois entouré d'une partie de douille (19) dans sa zone coopérant avec le dispositif de blocage (5).
